# EUROPEAN PATENT SPECIFICATION

(11) **EP 0 519 747 B1**
(45) Date of publication and mention of the grant of the patent: **04.09.1996**
(21) Application number: 92305667.5
(22) Date of filing: 19.06.1992
(51) Int. Cl.: C04B 24/12, B01D 19/04

(54) **Cement admixture and defoaming agent**
Zementzusatzmittel und Entschaumer
Additif pour ciment et agent anti-mousse

(30) Priority: 20.06.1991 US 718051; 19.08.1991 US 747051
(43) Date of publication of application: 23.12.1992
(73) Proprietor: W.R. Grace & Co.-Conn., New York, New York 10036 (US)
(72) Inventor: Gartner, Ellis Martin, Silver Spring, Maryland 20904 (US); Myers, David Francis, Columbia, Maryland 21044 (US)
(74) Representative: Bentham, Stephen

(56) References cited:
- US-A- 3 729 420
- US-A- 4 943 323
- DATABASE WPIL Week 9012, Derwent Publications Ltd., London, GB; AN 90-088458

## Description

The present invention is directed to certain alkylated alkanolamines as a hydraulic cement admixture capable of lowering the air content and related porosity of cement compositions and to the subject alkylated alkanolamines as an agent capable of defoaming aqueous solutions containing organic compounds.

The term cement is used to designate many different kinds of materials useful as binders or adhesives. Hydraulic cements are powdered inorganic materials which, when mixed with water, form a "paste" that hardens slowly. If further mixed with fine aggregate (e.g. sand), it forms a "mortar" and if mixed with both fine and coarse aggregate (e.g. sand and stone) it forms a "concrete" which are rock-hard products useful in structural formations. These products are commonly referred to as hydraulic cement compositions or mixes. These compositions are commonly formed from portland cements (conforms to ASTM C-150), blended cements (containing large amounts of slag or pozzolanic materials, etc.) and the like.

When concrete is formed, it requires mixing of the various components (hydraulic cement, sand, gravel, water and possibly cement additives) to a substantially uniform mixture. In the course of the mixing, air becomes entrapped in the composition and much of this air remains in the resultant cured hydraulic cement composition in the form of voids. If the amount of voids is large, the mix is said to be "air entrained". In most instances, a small amount of air entrainment is tolerated and, in certain instances, it is desired (to enhance the freeze/thaw properties of the concrete). However, in warmer climates, air entrainment in the hydraulic cement composition is not a desirable feature as it causes the resultant structure to have lower compressive strength than the mixture design is capable of attaining. There is an inverse relationship between air entrainment and compressive strength. It is generally believed that for each 1 volume percent of air bubbles contained in a concrete mass, the concrete mass loses about 5 percent of its compressive strength.

It is known that certain cement admixtures used for their beneficial effects also have a detrimental side effect of causing excessive air entrainment. Such cement additives include certain water-reducing agents and superplasticizers such as lignin sulfonates, naphthalene sulfonate polymers and the like; strength enhancers and set accelerators such as triisopropanolamine triethanolamine, respectively, and the like. The reduction of entrained air, whether due to mixing technique, admixture effect or the like, is highly desired to provide a structure which closely approaches its design strength and which has low permeability and, therefore, is not susceptible to attack by corrosive elements and the like which could permeate into the structure during its useful life.

Various materials are presently used in the cement industry to reduce the amount of air contained in cured hydraulic cement compositions. Conventional air-detraining agents are generally viewed as surfactants having low hydrophilic-lipophilic balance (HLB) values, such as tri-n-butylphosphate, n-octanol and the like. Normally, these agents have been found difficult and somewhat ineffective to use in commercial applications for several reasons. Firstly, they can not be readily introduced into dry concrete mixes due to the difficulty in dispersing the additive throughout the cement to provide a uniform distribution of the small amount of agent required. Further, the conventional air detrainers are not miscible with water and, therefore, not capable of being added with other conventional cement admixtures as such admixtures are invariably water-based compositions. When it is attempted to incorporate an air-detrainer into an aqueous admixture composition, it tends to separate out and is not properly supplied to the cement composition to be treated. Recently, "water-dispersible" air-detrainers have been introduced in an attempt to overcome this problem. These agents still have low HLB values and are actually not water soluble but merely have densities close to that of water. These agents tend to phase-segregate and are unstable in aqueous suspension in storage.

Air-detraining agents are generally very powerful in their effectiveness and, therefore, must be used in very small amounts which must be substantially uniformly distributed throughout the cement composition being treated. Presently known air-detraining agents have the disadvantages of being difficult to monitor and control in terms of dosage and distribution in cement compositions, thus causing the composition to exhibit unwanted variation from the desired degree of aeration (due to over or under dosage) and/or variation in aeration within the formed structure (due to poor distribution of agent).

It is highly desired to provide a water-soluble, readily dispersible material which is capable of providing air-detraining to cement compositions, in particular concretes.

With respect to the defoaming of aqueous solutions of organic compounds, it is well known that such solutions have a tendency to produce large volumes of foam. The foam has very little positive effect. Instead, it normally has the negative aspects of requiring the use of oversized reaction vessels, containers and the like to hold both the solution and the foam.

Common agents used as defoaming agents (agents capable of causing the foam structure to collapse and/or inhibiting formation of foam where such would normally occur) are organic compounds having low hydrophilic-lipophilic balance (HLB) values, similar to the conventional cement air detraining agents discussed above. Because they are not water soluble, these agents must be introduced into a solution to be treated either in neat form, or as an organic solution.

It is highly desired to have a water-soluble agent capable of defoaming aqueous solutions or organic compounds which foam. Such water-soluble agents can be diluted in water prior to application and, thereby, provide a means for accurate dosaging of the agent.

It is highly desired to have a water-soluble agent capable of defoaming aqueous solutions or organic compounds which foam. Such water-soluble agents can be diluted in water prior to application and, thereby, provide a means for accurate dosaging of the agent.

### SUMMARY OF THE INVENTION

The present invention seeks to provide a water soluble agent capable of air-detraining hydraulic cement compositions as well as for providing defoaming agent for aqueous solutions of organic compounds. The subject is composed of an aqueous solution having a pH of from about 6 to 8 to at least one N-alkylalkanolamine or N-alkyl hydroxylamine.

The present invention thus provides an admixture for cement compositions comprising an aqueous solution having a pH of from about 6 to about 8 containing from about 0.01 to about 10 percent of an alkylated amine salt represented by the formula: 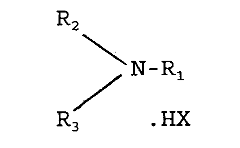
wherein R₁ represents a C₂-C₆ hydroxyalkyl group or hydrogen; R₂ represents a C₂-C₆ hydroxyalkyl or a C₂-C₁₀ alkyl group provided that when R₁ represents a hydrogen, R₂ represents a C₂-C₆ hydroxyalkyl group; R₃ represents a C₂-C₁₀ alkyl group and HX represents a salt forming inorganic or organic acid; and at least one cement admixture agent selected from a cement water-reducing agent, superplasticizer, corrosion inhibitor, set accelerator or strength enhancer; said amine salt and at least one cement admixture agent are present in a ratio of from about 0.0001 to 10.

The invention further provides a hydraulic cement composition capable of forming a low air entrained structure comprising a hydraulic cement and from 0.0001 to 1 percent by weight based on the cement of an amine represented by the formula: 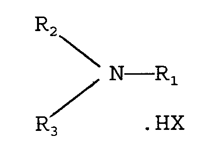
wherein R₁ represents a C₂-C₆ hydroxyalkyl or hydrogen; R₂ represents a C₂-C₆ hydroxyalkyl or a C₂-C₁₀ alkyl group provided that when R₁ represents a hydrogen, R₂ represents a C₂-C₆ hydroxyalkyl group; R₃ represents a C₂-C₁₀ alkyl group; and HX represents a salt forming inorganic or organic acid.

The invention yet further provides a method of defoaming an aqueous foam-forming solution of an organic compound comprising contacting said foam-forming solution with an effective amount of dibutylaminobutanol salt to substantially suppress foam formation.

It is preferred that when the amine is used in connection with a cementitious composition each hydroxyalkyl is selected from a C₂-C₅ hydroxylalkyl group and each alkyl is selected from a C₂-C₈ alkyl and when used to defoam aqueous solutions each hydroxylalkyl is a C₃-C₆ hydroxylalkyl group and each alkyl is selected from a C₃-C₁₀ alkyl group.

The preferred subject admixture is thus formed from tertiary amines having one or two C₂-C₅ hydroxyalkyl groups bonded to the nitrogen atom and the remaining bonds of the nitrogen contains C₂-C₈ alkyl group(s). Stated another way the tertiary amines useful as the subject admixture are N,N-di(C₂-C₈ alkylamine, C₂-C₅ alkanol and N-(C₂-C₈ alkyl)amino-N,N-di (C₂-C₅) alkanol compounds. Alternately, the subject admixture can be formed from secondary amines in which two bonds of the nitrogen substituted with a C₂-C₈ alkyl group and a C₂-C₅ hydroxyalky group.

The present agent can be a tertiary amine selected from dialkyl alkanolamines and alkyldi(alkanol) amines. Examples of suitable N,N-dialkylalkanolamines are N,N-di(C₂-C₈ alkyl)ethanolamines such as diethyl ethanolamine, di(n-propyl)ethanolamine, di(n-butyl) ethanolamine and the like; N,N-di(C₂-C₈ alkyl)-1-amino-2-propanols such as di(n-propyl)isopropanolamine, di(n-butyl)isopropanolamine, di(n-octyl)isopropanolamine and the like; N,N-di(C₂-C₈ alkyl)-1-amino-2-hydroxybutane and N,N-di(C₂-C₈ alkyl)-1-hydroxy-2-aminobutane such as dibutyl-1-amino-2-butanol, di(n-pentyl)-1-amino-2-butanol and the like.

The present agent can also be composed of a secondary amine selected from alkylalkanolamines. Examples include ethyl isopropanolamine, N-ethyl-1-amino-2-hydroxybutane, N-butyl-1-amino-2-hydroxybutane and the like.

The subject admixture can also be formed from N-alkylated bis(alkanol)amines such as N-propyl-1-amino-bis(2-propanol), N-butyldiethanolamine, N-octyl diethanolamine and the like.

The subject alkylated alkanolamines can be formed by the ring-opening reaction of an epoxide with a primary or secondary amine. The reaction is conventionally conducted at elevated temperatures of from about 50°C to about 200°C under pressures ranging from 0.2 to 4MPa (2 to 40 bar) in the presence of water to accelerate the reaction rate. When a primary amine is utilized, one obtains both the secondary and the tertiary N-alkylated products, while a secondary amine reactant provides the N,N-dialkylated tertiary amine product. Several of these materials are commercially available.

The preferred amines are the tertiary amines described herein above. The subject admixture can be formed from a mixture of the secondary and tertiary amines described above.

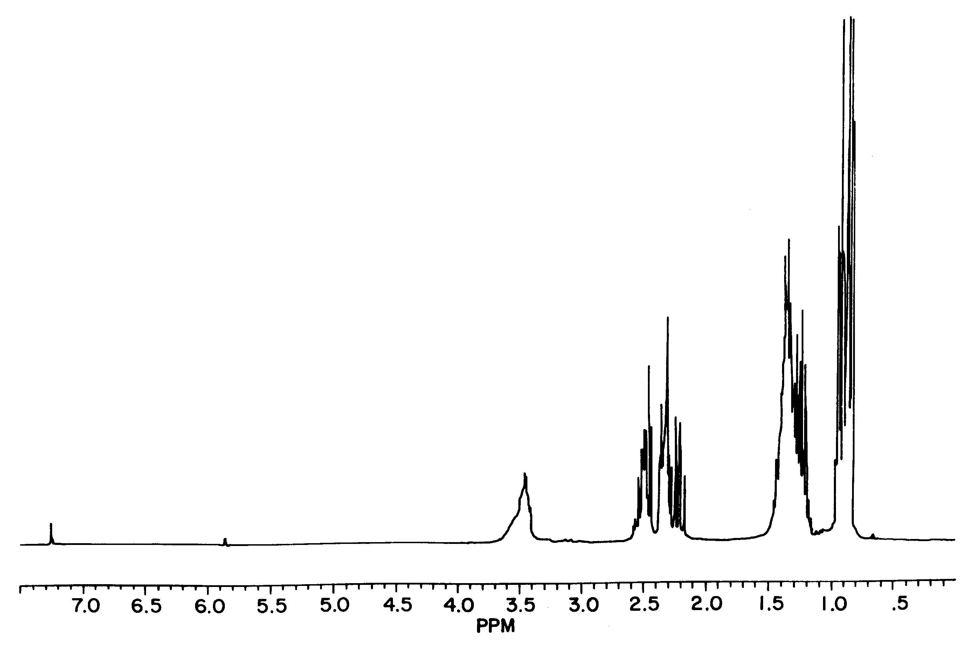

It has been found that the compound, N,N-dibutyl-1-amino-2-butanol, provides a most preferred amount of the present invention. This material is the product formed from the reaction of dibutylamine with 1,2-epoxybutane. Although it is generally believed that the epoxy compound must be added slowly to the amine to avoid a catastrophic exothermic reaction, it was presently observed that the two reactants can be added together in any manner provided the system is substantially anhydrous. The reaction occurs when water (from about 0.01 to 10 mole based on the molar amount of epoxy compound) is added to the mixture of reactants. The ring-opening reaction is carried out at elevated temperatures of from about 50°C to 200°C (preferably from about 90°C to 170°C) in the presence of water (from about 0.01 to 10 mole, preferably from about 1 to 10 mole, per mole of epoxy compound). The reaction can be readily conducted under reflux conditions. Where higher temperatures are used, the reaction must be conducted under sufficient pressure to maintain the mixture in a liquid state (preferably, autogenous pressure). A nuclear magnetic resonance spectrum of the novel N,N-dibutylamino-2-butanol compound, conducted in deuterated chloroform, is shown in Figure 1.

The subject alkylated alkanolamine air-detraining agents are soluble in aqueous solutions when in the form of a substantially neutral salt. The solution will have a pH of from about 5 to 8, preferably 6 to 7. The salt of these agents are readily formed with an acid (HX) wherein H represents the acidic proton of the acid and X represents the remainder of the acid compounds selected from inorganic acids such as sulfuric, nitric, or halogenic acids, and the like or from organic acids such as C₁-C₅ alkanoic acids, as for example formic, acetic, propionic, butyric acids and the like. The preferred acids used to form the salt of the subject amines are sulfuric acid or the C₁-C₂ alkanoic acid.

The subject amine agents, as the free amine, are normally weak bases having slight solubility in water. The free amine normally has a pH of about 8 - 9. Aqueous solution/dispersion of the free amine are readily formed into solutions of the salt by introducing and mixing the acid, as described above, with the aqueous-free amine mixture. The concentration of amine salt within the solution can be from just a few percent (e.g. 2%) up to very high concentrations of 50 percent or even greater depending on the particular amine agent. These solutions can be directly used to store and transport the agent to the job site where it can be diluted and/or mixed with other agents to form the desired admixture.

The water-soluble alkylated alkanolamine salts are readily useable as a cement admixture and can be metered to a high degree to provide proper dosage to cement compositions as an air-detraining agent. Because of the high degree of activity of these salts, the ability to accurately meter dosages is a highly desired requirement. Similarly, the subject salts are very active defoaming agents and, therefore, the ability to accurately meter dosages is a highly desired requirement.

The subject water-soluble agents can be incorporated into a hydraulic cement or a paste, mortar or concrete hydraulic cement composition in conventional manners. For example, the subject agents can be readily interblended with the hydraulic cement as it is being formed from clinker and other raw materials to provide a dry blend of hydraulic cement capable of being used to form a low air entrained structure. Because of the low dosage requirement (the water content is therefore also small) and the low vapor pressures of the subject agents, they can be readily incorporated in the cement directly. Alternately, solutions of the agent can be incorporated as part of the water of hydration. Because of the agent's water solubility, such an application can be readily done and does not present the incompatibility problems of presently known agents. Finally, the present agents can be incorporated into an aqueous admixture solution which provides other desired admixture agents to the cement compositions as, for example, water reducing agents such as lignin sulfonates, naphthalene sulfonate-formaldehyde condensates and the like; superplasticizers such as polyacrylates and the like; corrosion inhibitors, such as calcium nitrite and the like; set accelerators, such as alkali metal chlorides, alkali metal nitrites, lower trialkanolamines and the like; strength enhancers such as fumed silica, higher trialkanolamines and the like. Because many of the commercial admixtures impart, as a secondary property, air-entrainment to the treated cement composition, the present agent can be incorporated and admixed with such agents in amounts which counter this secondary property to thus provide an improved admixture.

It is common for an admixture to be furnished and used as an aqueous solution. Most admixture agents accepted in commercial application are applied as an aqueous solution and, therefore, the ability of the present agents to have high water-solubility and activity makes them easily handled and applicable in commercial applications. The subject agents are normally present in concentrations of from about 0.01% to about 10% in aqueous admixture solutions as the sole agent therein or as one of a combination of agents of the admixture composition. The subject air detrainers are normally applied to the cement or cement composition as a dilute admixture solution to provide a dosage of from about 0.0001 to 1%, preferably from 0.0001 to 0.1%, and most preferably from about 0.001 to 0.05% by weight of agent solids based on cement solid content (s/c). The exact dosage required will depend upon the particular agent the present air-detrainer is used with, the dosage of such agent and/or degree of detraining desired. The dosage can be determined by the artisan by conventional experimentation and testing. When the present air detrainer is used in combination with other admixture agents it is normally present in from 0.0001 to 10 parts, preferably from 0.002 to 0.2 part in weight for each part of other admixture agent used.

Defoaming agents are generally powerful in their effectiveness and, therefore, are used in very low dosages. It is highly desired to have an agent which is capable of being diluted in water so that low, uniform dosages can be readily introduced and which is capable of being pre-formed into standard solutions for use as needed. The amount of agent required to cause substantial suppression of foam formation will depend on the particular agent used and the particular organic component of the aqueous solution to which application is being made. The present agents are normally effective when used in a weight ratio of defoaming agent to organic foam-forming component of from about 4:1 to 1:4 with from about 2:1 to 1:2 being preferred. The exact amount of defoaming agent can be readily determined by the artisan by simple testing and will depend on the particular organic foam-forming compound present, the degree of defoaming desired and the like.

The following examples are given for purposes of illustration and are not meant to be a limitation on the claims appended hereto. All parts and percentages are by weight unless otherwise stipulated.

The examples used various commercial portland cements having an elemental analysis, as oxides, shown in Table I below.

**TABLE I**

| Elemental analysis as oxides, % by mass | | | | | | | | | | | |
|---|---|---|---|---|---|---|---|---|---|---|---|
| Cement | Na₂O | K₂O | MgO | CaO | Al₂O₃ | Fe₂O₃ | SiO₂ | TiO₂ | SO₃ | LOI | Total |
| A | 0.37 | 0.21 | 1.84 | 64.56 | 5.51 | 2.74 | 20.93 | 0.24 | 1.98 | 1.12 | 99.6 |
| B | <0.2 | 0.44 | 4.18 | 62.21 | 4.07 | 3.40 | 21.11 | 0.44 | - | 2.14 | 98.2 |
| C | 0.08 | 0.59 | 0.71 | 64.51 | 4.36 | 3.43 | 21.40 | 0.18 | 2.85 | 1.21 | 99.4 |
| D | 0.45 | 0.40 | 3.63 | 61.95 | 4.54 | 3.38 | 21.41 | 0.39 | 2.46 | - | 98.6 |

### EXAMPLE I

Mortar mixes were prepared using two different hydraulic cements. The mortars were formed and tested for air content according to the procedures of ASTM C-185. In each instance, a mortar mix was formed which contained no admixture agent. To a portion of each mortar mix was added, as part of the water of hydration, 0.02% by weight of triisopropanolamine, a known strength enhancing admixture, based on the weight of the cement therein. To a second portion of each mix was added, as part of the water of hydration, the strength enhancing admixture with 0.01% by weight of dibutylamino-2-butanol (DBAB), as the acetate salt, added thereto. Several samples were prepared and tested according to ASTM C-185 and the results given below are the mean of each of the measured values.

The strength enhancer caused a significant increase in air entrainment which was reduced to below the level of the blank (overcame the air entrainment and further provided some extended air detrainment) in each instance. The results are shown in Table II below.

**TABLE II**

| Sample | Air Content, % | | |
|---|---|---|---|
| | Cement | Mean Value | % Change |
| blank | A | 7.1 | - |
| 0.02% TIPA | A | 8.7 | +22.5% |
| 0.02% TIPA + 0.01% DBAB | A | 6.0 | -15.5% |
| blank | B | 10.9 | - |
| 0.02% TIPA | B | 11.5 | +5.5% |
| 0.02% TIPA + 0.01% DBAB | B | 10.6 | -2.8% |

### EXAMPLE II

The process of Example I was followed except that the cement admixture added to the mortar composition was a cement superplasticizer (high range water-reducing agent) composed of a polyethyleneoxide-polyacrylate graft copolymer. The results showed a significant decrease in air entrainment when the superplasticizer was used in combination with DBAB.

| Sample | Air Content,% | | |
|---|---|---|---|
| | Cement | Mean Value | % Change |
| Blank | C | 9.7 | - |
| 0.1% Superplasticizer | C | 12.7 | +30.9 |
| 0.1% + 0.01% DBAB | C | 11.0 | +13.4 |

### EXAMPLE III

A test was performed in the same manner as described in Example I above except that the sand used was a graded sand having the following U.S. Standard sieve size distribution (pass through): No. 8/100%; No. 12/88.8%, No. 16/69.0%; No. 30/55.1%; No. 40/47.0%; No. 50/36.7%; No. 60/31.8; No. 80/27.5; No. 100/17.3; No. 140/5.43; and No. 200/0.9%. The use of such sand is known to provide a low air content mortar. The addition of the strength enhancer, triisopropanolamine, in 0.02% s/c (agent solid/cement solid) caused the air content to increase dramatically. When the admixture contained both 0.02% strength enhancer and 0.001% s/c of dibutylamino-2-butanol the air content was lowered to less than the blank standard.

**TABLE III**

| Sample | Mean Flow % | w/c | Mortar Air Content, % | | |
|---|---|---|---|---|---|
| | | | Test 1 | Test 2 | Mean |
| Blank | 86 | 0.48 | 3.0 | 2.9 | 3.0 |
| 0.02% TIPA | 91 | 0.48 | 5.5 | 5.4 | 5.5 |
| 0.02% TIPA¹ | 92 | 0.48 | 5.5 | 5.4 | 5.5 |
| 0.02% TIPA + 0.001% DBAB | 87 | 0.48 | 2.6 | 2.6 | 2.6 |
| 0.02% TIPA + 0.002% DBAB | 93 | 0.48 | 3.2 | 3.2 | 3.2 |

| | | | | | |
|---|---|---|---|---|---|
| ¹Repeat Test Conducted 24 hrs. after initial test | | | | | |

The results show that very small dosages are effective to control and reduce air content.

### EXAMPLE IV

The procedure of Example I was repeated except that various air detraining agents representative of the present invention were used to reduce the air content of strength-enhanced admixture formulations. The results are shown in Table IV below.

**TABLE IV**

| Sample¹ | Mean Flow % | w/c | Air Content, % | | |
|---|---|---|---|---|---|
| | | | Test 1 | Test 2 | Mean |
| Blank | 84 | 0.48 | 2.93 | 3.02 | 2.98 |
| 0.02% TIPA | 91 | 0.48 | 5.44 | 5.47 | 5.46 |
| 0.02% TIPA + 0.004% DBAB² | 92 | 0.48 | 3.11 | 3.06 | 3.09 |
| 0.02% TIPA + 0.004% DBAE² | 92 | 0.48 | 3.45 | 3.50 | 3.48 |
| 0.02% TIPA + 0.004% DEAE² | 96 | 0.48 | 4.15 | 4.09 | 4.12 |
| 0.02% TIPA + 0.004% BDEA² | 93 | 0.48 | 3.62 | 3.73 | 3.68 |

| | | | | | |
|---|---|---|---|---|---|
| 1. Cement D was used | | | | | |
| 2. DBAE = dibutylaminoethanol; DEAE = diethylaminoethanol; BDEA = butyldiethanolamine; DBAB = dibutylamino-2-butanol | | | | | |

### EXAMPLE V

Two concrete compositions were formed each from the following recipe of components: 3539 parts portland cement C, 9800 parts coarse aggregate, 7176 parts fine aggregate and 1543 parts water (w/c ratio of 0.435). In each instance, the mixing pattern was to first introduce the coarse and fine aggregate into the mixer (Lancaster Mixer, 0.75 ft³ capacity) followed, in 1 min., by the addition of the cement and at 1.75 min. the water was added. The mixing was continued until 7.75 minutes elapsed. A sample was then taken to measure slump and plastic air content. At 12.5 minutes, admixture was introduced. In one batch, the admixture was lignin sulfonate water reducer (a 33% aqueous sol. Reed SFX) at 0.2% s/c dosage. The second batch was treated with the same lignin sulfonate solution having DBAB (0.002% s/c dosage) as the acetate salt dissolved therein at a solids ratio (lignin/DBAB) of 100. Mixing was then continued for 2 minutes (to 14.5 minutes from start) and then again for about 6 min (20.25 min from start) with sampling for slump and air content at each point. The results in Table V show that the present air-detraining agents are readily mixed with aqueous admixture solutions to provide a reduced air content cement composition which still maintains the desired property (here, increased slump) of the original admixture.

**TABLE V**

| Time of Mix (min) | Admixture | | Properties | |
|---|---|---|---|---|
| | Lignin | Lignin +DBAB | Slump (in.) | Plastic Air (%) |
| 0 | - | - | - | - |
| 7.75 | - | - | 1.25 | 0.9 |
| 12.50 | admixture added | | | |
| 14.50 | x | | 6.75 | 6.5 |
| 14.50 | | x | 5.50 | 2.8 |
| 20.25 | x | | 5.25 | 4.6 |
| 20.25 | | x | 3.00 | 1.7 |

The compositions of the invention described and claimed herein will generally be prepared using an amine salt. It Will, however, be understood that, depending on the pH of the compositions the amine may be present in the composition as such rather than in the form of its salt: such compositions comprising the free amine are embraced by the present invention.

## Claims (Claims for the following Contracting State(s): AT, BE, CH, LI, DE, DK, FR, GB, GR, IT, LU, MC, NL, PT, SE)

1. A hydraulic cement composition capable of forming a low air entrained structure comprising a hydraulic cement and from 0.0001 to 1 percent by weight based on the cement of an amine represented by the formula: 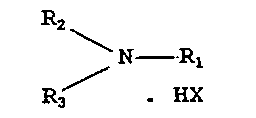 wherein R₁ represents a C₂-C₆ hydroxyalkyl or hydrogen; R₂ represents a C₂-C₆ hydroxyalkyl or a C₂-C₁₀ alkyl group provided that when R₁ represents a hydrogen, R₂ represents a C₂-C₆ hydroxyalkyl group; R₃ represents a C₂-C₁₀ alkyl group; and HX represents a salt forming inorganic or organic acid.

2. The composition of Claim 1 wherein each of the hydroxyalkyl groups are independently selected from a C₂-C₅ hydroxyalkyl and each alkyl group is selected from a C₂-C₈ alkyl.

3. The composition of Claim 2 wherein the amine is dibutyl-1-amino-2-butanol.

4. The composition of Claim 1 wherein the amine is present in 0.001 to 0.05% by weight based on the cement.

5. The composition of Claim 3 wherein the amine is present in 0.001 to 0.05% by weight based on the cement.

6. An admixture for cement compositions comprising an aqueous solution having a pH of from about 6 to about 8 containing from about 0.01 to about 10 percent of an alkylated amine salt represented by the formula: 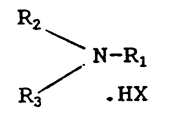 wherein R₁ represents a C₂-C₆ hydroxyalkyl group or hydrogen; R₂ represents a C₂-C₆ hydroxyalkyl or a C₂-C₁₀ alkyl group provided that when R₁ represents a hydrogen, R₂ represents a C₂-C₆ hydroxyalkyl group; R₃ represents a C₂-C₁₀ alkyl group and HX represents a salt forming inorganic or organic acid; and at least one cement admixture agent selected from a cement water-reducing agent, superplasticizer, corrosion inhibitor, set accelerator or strength enhancer; said amine salt and at least one cement admixture agent are present in a ratio of from about 0.0001 to 10.

7. The admixture of Claim 6 wherein the amine is dibutyl-1-amino-2-butanol.

8. A method of defoaming an aqueous foam-forming solution of an organic compound comprising contacting said foam-forming solution with an effective amount (of dibutylaminobutanol salt) to substantially suppress foam formation.

9. The method of Claim 8 wherein the amine salt is a substantially neutral salt formed with an inorganic acid or a C₁-C₅ alkanoic acid and said solution has a pH of from about 5 to about 7.

10. The method of Claim 8 wherein the amine is 1-(dibutylamino)-2-butanol.

## Claims (Claims for the following Contracting State(s): ES)

1. A hydraulic cement composition capable of forming a low air entrained structure comprising a hydraulic cement and from 0.0001 to 1 percent by weight based on the cement of an amine represented by the formula: 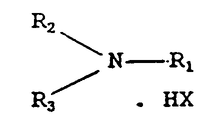 wherein R₁ represents a C₂-C₆ hydroxyalkyl or hydrogen; R₂ represents a C₂-C₆ hydroxyalkyl or a C₂-C₁₀ alkyl group provided that when R₁ represents a hydrogen, R₂ represents a C₂-C₆ hydroxyalkyl group; R₃ represents a C₂-C₁₀ alkyl group; and HX represents a salt forming inorganic or organic acid.

2. The composition of Claim 1 wherein each of the hydroxyalkyl groups are independently selected from a C₂-C₅ hydroxyalkyl and each alkyl group is selected from a C₂-C₈ alkyl.

3. The composition of Claim 2 wherein the amine is dibutyl-1-amino-2-butanol.

4. The composition of Claim 1 wherein the amine is present in 0.001 to 0.05% by weight based on the cement.

5. The composition of Claim 3 wherein the amine is present in 0.001 to 0.05% by weight based on the cement.

6. An admixture for cement compositions comprising an aqueous solution having a pH of from about 6 to about 8 containing from about 0.01 to about 10 percent of an alkylated amine salt represented by the formula: 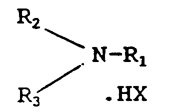 wherein R₁ represents a C₂-C₆ hydroxyalkyl group or hydrogen; R₂ represents a C₂-C₆ hydroxyalkyl or a C₂-C₁₀ alkyl group provided that when R₁ represents a hydrogen, R₂ represents a C₂-C₆ hydroxyalkyl group; R₃ represents a C₂-C₁₀ alkyl group and HX represents a salt forming inorganic or organic acid; and at least one cement admixture agent selected from a cement water-reducing agent, superplasticizer, corrosion inhibitor, set accelerator or strength enhancer; said amine salt and at least one cement admixture agent are present in a ratio of from about 0.0001 to 10.

7. The admixture of Claim 6 wherein the amine is dibutyl-1-amino-2-butanol.

8. A method of defoaming an aqueous foam-forming solution of an organic compound comprising contacting said foam-forming solution with an effective amount (of dibutylaminobutanol salt) to substantially suppress foam formation.

9. The method of Claim 8 wherein the amine salt is a substantially neutral salt formed with an inorganic acid or a C₁-C₅ alkanoic acid and said solution has a pH of from about 5 to about 7.

10. The method of Claim 8 wherein the amine is 1-(dibutylamino)-2-butanol.

11. A process for producing a hydraulic cement composition capable of forming a low air entrained structure which process comprises incorporating into a hydraulic cement, from 0.0001 to 1 percent by weight based on the cement of an amine represented by the formula: 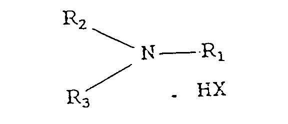 wherein R₁ represents a C₂-C₆ hydroxyalkyl or hydrogen; R₂ represents a C₂-C₆ hydroxyalkyl or a C₂-C₁₀ alkyl group provided that when R₁ represents a hydrogen, R₂ represents a C₂-C₆ hydroxyalkyl group; R₃ represents a C₂-C₁₀ alkyl group; and HX represents a salt forming inorganic or organic acid.

12. A process for producing an admixture for cement compositions which process comprises admixing an aqueous solution having a pH of from 6 to 8 containing from 0.01 to 10 percent of an alkylated amine salt represented by the formula: 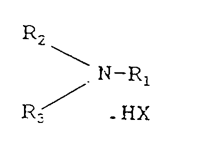 wherein R₁ represents a C₂-C₆ hydroxyalkyl group or hydrogen; R₂ represents a C₂-C₆ hydroxyalkyl or a C₂-C₁₀ alkyl group provided that when R₁ represents a hydrogen, R₂ represents a C₂-C₆ hydroxyalkyl group; R₃ represents a C₂-C₁₀ alkyl group and HX represents a salt forming inorganic or organic acid; and at least one cement admixture agent selected from a cement water-reducing agent, superplasticizer, corrosion inhibitor, set accelerator or strength enhancer; said amine salt and at least one cement admixture agent being present in a ratio of from 0.0001 to 10.

## Patentansprüche (Patentansprüche für folgende(n) Vertragsstaat(en): AT, BE, CH, LI, DE, DK, FR, GB, GR, IT, LU, MC, NL, PT, SE)

1. Hydraulische Zementzusammensetzung, die eine Struktur mit wenig Luftporen bilden kann und einen hydraulischen Zement und 0,0001 bis 1 Gew.%, bezogen auf den Zement, von einem Amin mit der Formel 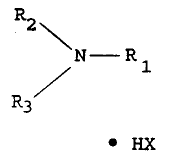 umfaßt, wobei R₁ eine C₂- bis C₆-Hydroxyalkylgruppe oder Wasserstoff ist, R₂ eine C₂- bis C₆-Hydroxyalkylgruppe oder C₂- bis C₁₀-Alkylgruppe ist mit der Maßgabe, daß R₂ eine C₂- bis C₆-Hydroxyalkylgruppe ist, wenn R₁ Wasserstoff ist, R₃ eine C₂- bis C₁₀-Alkylgruppe ist und HX eine salzbildende anorganische oder organische Säure ist.

2. Zusammensetzung nach Anspruch 1, bei der jede der Hydroxyalkylgruppen unabhängig ausgewählt ist aus C₂- bis C₅-Hydroxyalkyl und jede Alkylgruppe ausgewählt ist aus C₂- bis C₈-Alkyl.

3. Zusammensetzung nach Anspruch 2, bei der das Amin Dibutyl-1-amino-2-butanol ist.

4. Zusammensetzung nach Anspruch 1, bei der das Amin in einer Menge von 0,001 bis 0,05 Gew.%, bezogen auf den Zement, vorhanden ist.

5. Zusammensetzung nach Anspruch 3, bei der das Amin in einer Menge von 0,001 bis 0,05 Gew.%, bezogen auf den Zement, vorhanden ist.

6. Zusatzmischung für Zementzusammensetzungen, die eine wäßrige Lösung mit einem pH-Wert von etwa 6 bis etwa 8, die etwa 0,01 bis etwa 10 % eines alkylierten Aminsalzes mit der Formel 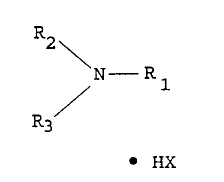 , wobei R₁ eine C₂- bis C₆-Hydroxyalkylgruppe oder Wasserstoff ist, R₂ eine C₂- bis C₆-Hydroxyalkylgruppe oder C₂- bis C₁₀-Alkylgruppe ist mit der Maßgabe, daß R₂ eine C₂- bis C₆-Hydroxyalkylgruppe ist, wenn R₁ Wasserstoff ist, R₃ eine C₂- bis C₁₀-Alkylgruppe ist und HX eine salzbildende anorganische oder organische Säure ist, und mindestens ein Zementzusatzmittel ausgewählt aus einem Mittel zur Verringerung des Wassers im Zement, Superplastifizierungsmittel, Korrosionsschutzmittel, Abbindebeschleuniger oder Festigkeiterhöhungsmittel enthält, wobei das Aminsalz und das mindestens eine Zementzusatzmittel in einem Verhältnis von 0,0001 bis 10 vorhanden sind.

7. Zusatzmischung nach Anspruch 6, bei der das Amin Dibutyl-1-amino-2-butanol ist.

8. Verfahren zum Entschäumen einer wäßrigen schaumbildenden Lösung einer organischen Verbindung, bei dem die schaumbildende Lösung mit einer effektiven Menge Dibutylaminobutanolsalz kontaktiert wird, um die Schaumbildung im wesentlichen zu unterdrücken.

9. Verfahren nach Anspruch 8, bei dem das Aminsalz ein im wesentlichen neutrales Salz ist, das mit einer anorganischen Säure oder einer C₁- bis C₅-Alkancarbonsäure gebildet ist, wobei die Lösung einen pH-Wert von etwa 5 bis etwa 7 hat.

10. Verfahren nach Anspruch 8, bei dem das Amin 1-(Dibutylamino)-2-butanol ist.

## Patentansprüche (Patentansprüche für folgende(n) Vertragsstaat(en): ES)

1. Hydraulische Zementzusammensetzung, die eine Struktur mit wenig Luftporen bilden kann und einen hydraulischen Zement und 0,0001 bis 1 Gew.%, bezogen auf den Zement, von einem Amin mit der Formel 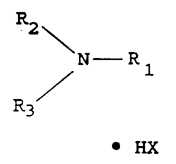 umfaßt, wobei R₁ eine C₂- bis C₆-Hydroxyalkylgruppe oder Wasserstoff ist, R₂ eine C₂- bis C₆-Hydroxyalkylgruppe oder C₂- bis C₁₀-Alkylgruppe ist mit der Maßgabe, daß R₂ eine C₂- bis C₆-Hydroxyalkylgruppe ist, wenn R₁ Wasserstoff ist, R₃ eine C₂- bis C₁₀-Alkylgruppe ist und HX eine salzbildende anorganische oder organische Säure ist.

2. Zusammensetzung nach Anspruch 1, bei der jede der Hydroxyalkylgruppen unabhängig ausgewählt ist aus C₂- bis C₅-Hydroxyalkyl und jede Alkylgruppe ausgewählt ist aus C₂- bis C₈-Alkyl.

3. Zusammensetzung nach Anspruch 2, bei der das Amin Dibutyl-1-amino-2-butanol ist.

4. Zusammensetzung nach Anspruch 1, bei der das Amin in einer Menge von 0,001 bis 0,05 Gew.%, bezogen auf den Zement, vorhanden ist.

5. Zusammensetzung nach Anspruch 3, bei der das Amin in einer Menge von 0,001 bis 0,05 Gew.%, bezogen auf den Zement, vorhanden ist.

6. Zusatzmischung für Zementzusammensetzungen, die eine wäßrige Lösung mit einem pH-Wert von etwa 6 bis etwa 8, die etwa 0,01 bis etwa 10 % eines alkylierten Aminsalzes mit der Formel 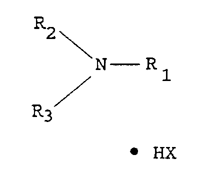 , wobei R₁ eine C₂- bis C₆-Hydroxyalkylgruppe oder Wasserstoff ist, R₂ eine C₂- bis C₆-Hydroxyalkylgruppe oder C₂- bis C₁₀-Alkylgruppe ist mit der Maßgabe, daß R₂ eine C₂- bis C₆-Hydroxyalkylgruppe ist, wenn R₁ Wasserstoff ist, R₃ eine C₂- bis C₁₀-Alkylgruppe ist und HX eine salzbildende anorganische oder organische Säure ist, und mindestens ein Zementzusatzmittel ausgewählt aus einem Mittel zur Verringerung des Wassers im Zement, Superplastifizierungsmittel, Korrosionsschutzmittel, Abbindebeschleuniger oder Festigkeiterhöhungsmittel enthält, wobei das Aminsalz und das mindestens eine Zementzusatzmittel in einem Verhältnis von 0,0001 bis 10 vorhanden sind.

7. Zusatzmischung nach Anspruch 6, bei der das Amin Dibutyl-1-amino-2-butanol ist.

8. Verfahren zum Entschäumen einer wäßrigen schaumbildenden Lösung einer organischen Verbindung, bei dem die schaumbildende Lösung mit einer effektiven Menge Dibutylaminobutanolsalz kontaktiert wird, um die Schaumbildung im wesentlichen zu unterdrücken.

9. Verfahren nach Anspruch 8, bei dem das Aminsalz ein im wesentlichen neutrales Salz ist, das mit einer anorganischen Säure oder einer C₁- bis C₅-Alkancarbonsäure gebildet ist, wobei die Lösung einen pH-Wert von etwa 5 bis etwa 7 hat.

10. Verfahren nach Anspruch 8, bei dem das Amin 1-(Dibutylamino)-2-butanol ist.

11. Verfahren zur Herstellung einer hydraulischen Zementzusammensetzung, die eine Struktur mit wenig Luftporen bilden kann, bei dem in einen hydraulischen Zement 0,0001 bis 1 Gew.%, bezogen auf den Zement, von einem Amin mit der Formel 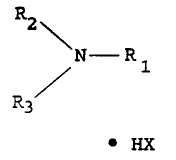 eingebracht werden, wobei R₁ eine C₂- bis C₆-Hydroxyalkylgruppe oder Wasserstoff ist, R₂ eine C₂- bis C₆-Hydroxyalkylgruppe oder C₂- bis C₁₀-Alkylgruppe ist mit der Maßgabe, daß R₂ eine C₂- bis C₆-Hydroxyalkylgruppe ist, wenn R₁ Wasserstoff ist, R₃ eine C₂- bis C₁₀-Alkylgruppe ist und HX eine salzbildende anorganische oder organische Säure ist.

12. Verfahren zur Herstellung einer Zusatzmischung für Zementzusammensetzungen, bei dem eine wäßrige Lösung mit einem pH-Wert von 6 bis 8, die 0,01 bis 10 % eines alkylierten Aminsalzes mit der Formel 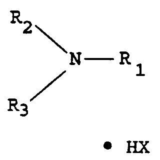 enthält, wobei R₁ eine C₂- bis C₆-Hydroxyalkylgruppe oder Wasserstoff ist, R₂ eine C₂- bis C₆-Hydroxyalkylgruppe oder C₂- bis C₁₀-Alkylgruppe ist mit der Maßgabe, daß R₂ eine C₂- bis C₆-Hydroxyalkylgruppe ist, wenn R₁ Wasserstoff ist, R₃ eine C₂- bis C₁₀-Alkylgruppe ist und HX eine salzbildende anorganische oder organische Säure ist, und mindestens ein Zementzusatzmittel ausgewählt aus einem Mittel zur Verringerung des Wassers im Zement, Superplastifizierungsmittel, Korrosionsschutzmittel, Abbindebeschleuniger oder Festigkeiterhöhungsmittel gemischt werden, wobei das Aminsalz und das mindestens eine Zementzusatzmittel in einem Verhältnis von 0,0001 bis 10 vorliegen.

## Revendications (Revendications pour l'(les) Etat(s) contractant(s) suivant(s): AT, BE, CH, LI, DE, DK, FR, GB, GR, IT, LU, MC, NL, PT, SE)

1. Composition de ciment hydraulique capable de former une structure avec peu d'air piégé, comprenant un ciment hydraulique et de 0,0001 à 1 pour cent en poids sur la base du ciment d'une amine représentée par la formule : 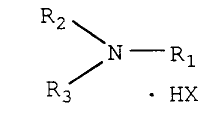 où R₁ reprêsente un hydroxyalkyle C₂-C₆ ou l'hydrogène; R₂ représente un hydroxyalkyle C₂-C₆ ou un groupe alkyle C₂-C₁₀ à la condition que lorsque R₁ représente un hydrogène, R₂ représente un groupe hydroxyalkyle C₂-C₆; R₃ représente un groupe alkyle C₂-C₁₀; et HX est un acide organique ou inorganique formant un sel.

2. Composition selon la revendication 1, dans laquelle chacun des groupes hydroxyalkyle est indépendamment choisi parmi un hydroxyalkyle C₂-C₅ et chaque groupe alkyle est choisi parmi un alkyle C₂-C₆.

3. Composition selon la revendication 2, dans laquelle l'amine est le dibutyl-1-amino-2-butanol.

4. Composition selon la revendication 1, dans laquelle l'amine est présente suivante 0,001 à 0,05% en poids sur la base du ciment.

5. Composition selon la revendication 3, dans laquelle l'amine est présente suivant 0,001 à 0,05% en poids sur la base du ciment.

6. Additif pour compositions de ciment comprenant une solution aqueuse ayant un pH d'environ 6 à environ 8 contenant d'environ 0,01 à environ 10 pour cent d'un sel d'amine alkylée représenté par la formule : 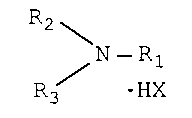 où R₁ est un groupe hydroxyalkyle C₂-C₆ ou l'hydrogène; R₂ est un hydroxyalkyle C₂-C₆ ou un groupe alkyle C₂-C₁₀ à la condition que lorsque R₁ représente l'hydrogène, R₂ est un groupe hydroxyalkyle C₂-C₆; R₃ est un groupe alkyle C₂-C₁₀ et HX est un acide organique ou inorganique formant un sel; et au moins un agent additif au ciment choisi parmi un agent réduisant l'eau du ciment, un superplastifiant, un inhibiteur de corrosion, un accélérateur de durcissement ou un agent renforçant la résistance; ledit sel d'amine et au moins un agent additif pour le ciment étant présents suivant un rapport compris entre environ 0,0001 et 10.

7. Additif selon la revendication 6, dans lequel l'amine est le dibutyl-1-amino-2-butanol.

8. Procédé de démoussage d'une solution aqueuse formant de la mousse d'un composé organique consistant à mettre en contact ladite solution formant de la mousse avec une quantité efficace de sel de dibutylaminobutanol pour supprimer sensiblement la formation de mousse.

9. Procédé selon la revendication 8, dans lequel le sel d'amine est un sel sensiblement neutre formé avec un acide inorganique ou un acide alcanoïque C₁-C₅ et ladite solution possède un pH d'environ 5 à environ 7.

10. Procédé selon la revendication 8, dans lequel l'amine est le 1-(dibutylamino)-2-butanol.

## Revendications (Revendications pour l'(les) Etat(s) contractant(s) suivant(s): ES)

1. Composition de ciment hydraulique capable de former une structure avec peu d'air piégé, comprenant un ciment hydraulique et de 0,0001 à 1 pour cent en poids sur la base du ciment d'une amine représentée par la formule : 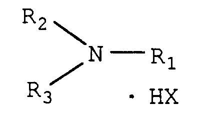 où R₁ représente un hydroxyalkyle C₂-C₆ ou l'hydrogène; R₂ représente un hydroxyalkyle C₂-C₆ ou un groupe alkyle C₂-C₁₀ à la condition que lorsque R₁ représente un hydrogène, R₂ représente un groupe hydroxyalkyle C₂-C₆; R₃ représente un groupe alkyle C₂-C₁₀; et HX est un acide organique ou inorganique formant un sel.

2. Composition selon la revendication 1, dans laquelle chacun des groupes hydroxyalkyle est indépendamment choisi parmi un hydroxyalkyle C₂-C₅ et chaque groupe alkyle est choisi parmi un alkyle C₂-C₆.

3. Composition selon la revendication 2, dans laquelle l'amine est le dibutyl-1-amino-2-butanol.

4. Composition selon la revendication 1, dans laquelle l'amine est présente suivante 0,001 à 0,05% en poids sur la base du ciment.

5. Composition selon la revendication 3, dans laquelle l'amine est présente suivant 0,001 à 0,05% en poids sur la base du ciment.

6. Additif pour compositions de ciment comprenant une solution aqueuse ayant un pH d'environ 6 à environ 8 contenant d'environ 0,01 à environ 10 pour cent d'un sel d'amine alkylée représenté par la formule : 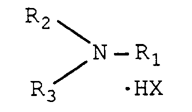 où R₁ est un groupe hydroxyalkyle C₂-C₆ ou l'hydrogène; R₂ est un hydroxyalkyle C₂-C₆ ou un groupe alkyle C₂-C₁₀ à la condition que lorsque R₁ représente l'hydrogène, R₂ est un groupe hydroxyalkyle C₂-C₆; R₃ est un groupe alkyle C₂-C₁₀ et HX est un acide organique ou inorganique formant un sel; et au moins un agent additif au ciment choisi parmi un agent réduisant l'eau du ciment, un superplastifiant, un inhibiteur de corrosion, un accélérateur de durcissement ou un agent renforçant la résistance; ledit sel d'amine et au moins un agent additif pour le ciment étant présents suivant un rapport compris entre environ 0,0001 et 10.

7. Additif selon la revendication 6, dans lequel l'amine est le dibutyl-1-amino-2-butanol.

8. Procédé de démoussage d'une solution aqueuse formant de la mousse d'un composé organique consistant à mettre en contact ladite solution formant de la mousse avec une quantité efficace de sel de dibutylaminobutanol pour supprimer sensiblement la formation de mousse.

9. Procédé selon la revendication 8, dans lequel le sel d'amine est un sel sensiblement neutre formé avec un acide inorganique ou un acide alcanoïque C₁-C₅ et ladite solution possède un pH d'environ 5 à environ 7.

10. Procédé selon la revendication 8, dans lequel l'amine est le 1-(dibutylamino)-2-butanol.

11. Procédé pour produire une composition de ciment hydraulique capable de former une structure à faible quantité d'air piégé, lequel procédé consiste à incorporer dans un ciment hydraulique, de 0,0001 à 1 pour cent en poids sur la base du ciment d'une amine représentée par la formule : 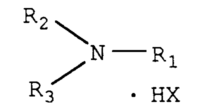 où R₁ représente un hydroxyalkyle C₂-C₆ ou l'hydrogène; R₂ représente un hydroxyalkyle C₂-C₆ ou un groupe alkyle C₂-C₁₀ à la condition que quand R₁ est l'hydrogène, R₂ est un groupe hydroxyalkyle C₂-C₆; R₃ est un groupe alkyle C₂-C₁₀; et HX est un acide organique ou inorganique formant un sel.

12. Procédé pour produire un additif pour des compositions de ciment, lequel procédé consiste à mélanger une solution aqueuse ayant un pH de 6 à 8 contenant de 0,01 à 10 pour cent d'un sel d'amine alkylée représenté par la formule : 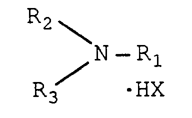 où R₁ représente un groupe hydroxyalkyle C₂-C₆ ou l'hydrogène; R₂ représente un hydroxyalkyle C₂-C₆ ou un groupe alkyle C₂-C₁₀ à la condition que quand R₁ est l'hydrogène, R₂ représente un groupe hydroxyalkyle C₂-C₆; R₃ représente un groupe alkyle C₂-C₁₀ et HX représente un acide organique ou inorganique formant un sel; et au moins un agent additif pour ciment choisi parmi un agent réduisant l'eau du ciment, un superplastifiant, un inhibiteur de corrosion, un accélérateur de durcissement ou un agent renforçant la résistance; ledit sel d'amine et au moins un additif en mélange étant présents suivant un rapport de 0,0001 à 10.
